# EUROPÄISCHE PATENTANMELDUNG

(11) **EP 2 034 432 A1**
(43) Veröffentlichungstag der Anmeldung: **11.03.2009**
(21) Anmeldenummer: 07017391.9
(22) Anmeldetag: 05.09.2007
(51) Int. Cl.: G06Q 20/00

(54) **Verfahren und Vorrichtung zur Durchführung von Transaktionen**

(71) Anmelder: Deutsche Post AG, 53113 Bonn (DE)
(72) Erfinder: Sokolowski, Roland, 51491 Overath (DE); Schoenebeck, Heiko Armin, D-13156 Berlin (DE)
(74) Vertreter: Jostarndt, Hans-Dieter

(57) **Zusammenfassung**

Die Erfindung betrifft ein Verfahren zur verifizierten Durchführung von Transaktionen, bei dem ein Transaktionsauftrag an einem Computermittel (10) erzeugt und an eine Transaktionseinheit (20) übermittelt wird, welche die beauftragte Transaktion durchführt. Das Verfahren zeichnet sich dadurch aus, dass zuvor eine Hinterlegung von biometrischen Erkennungsdaten wenigstens eines Versenders (40) in einem Speicher (21) in Verbindung mit der Transaktionseinheit (20) erfolgt. Die Transaktionseinheit (20) verarbeitet den Transaktionsauftrag, wobei sie die beauftragte Transaktion wenigstens teilweise in akustische Signale umsetzt. Die Transaktionseinheit (20) öffnet daraufhin einen Kommunikationskanal zu einer Kommunikationseinrichtung (30) im Bereich des Versenders (40) und übermittelt die akustischen Signale an die Kommunikationseinrichtung (30), so dass diese die akustischen Signale ausgeben kann. Der Versender (40) gibt daraufhin biometrische Daten in die Kommunikationseinrichtung (30) ein und die Transaktionseinheit (20) vergleicht diese über den Kommunikationskanal empfangenen biometrischen Daten des Versenders (40) mit aus dem Speicher (21) aufgerufenen biometrischen Erkennungsdaten des Versenders (40) und führt damit eine Verifikation der Identität des Versenders (40) durch. Bei positiver Verifikation der Identität des Versenders (40) wird die Transaktion gemäß dem Transaktionsauftrag durchgeführt.

Die Erfindung betrifft ferner eine Transaktionseinheit (20) zur Durchführung des Verfahrens.

## Beschreibung

Die Erfindung betrifft ein Verfahren zur verifizierten Durchführung von Transaktionen, bei dem ein Transaktionsauftrag an einem Computermittel erzeugt und an eine Transaktionseinheit übermittelt wird, welche die beauftragte Transaktion durchführt. Der Transaktionsauftrag umfasst eine eindeutige Identifikation des Versenders des Transaktionsauftrags und vor Durchführung der Transaktion wird eine Verifikation der Identität des Versenders des Transaktionsauftrags durchgeführt.

Die Erfindung betrifft ferner eine Transaktionseinheit zur Durchführung eines solchen Verfahrens.

Bei der Beauftragung und Abwicklung von Transaktionen ist es üblicherweise erforderlich, vor Durchführung der Transaktion eine Verifikation der Identität des Auftraggebers durchzuführen. Insbesondere bei Bankgeschäften ist dies der Fall, wobei bei Bankgeschäften über das Internet oder das Telefon für diesen Zweck vorzugsweise TAN-Verfahren zum Einsatz kommen. Bei TAN- Verfahren wird einem Bankkunden eine Liste von Transaktionsnummern bereitgestellt, die er jeweils zur Verifikation einer Geldtransaktion verwenden kann, indem er sie beispielsweise in die Maske eines Onlinebanking-Programms eingibt oder über das Telefon übermittelt. Da diese Transaktionsnummern von Betrügern abgegriffen werden können, ist die Sicherheit bei einem solchen Verfahren begrenzt.

Bei iTAN-Verfahren wird die Sicherheit dadurch erhöht, dass der Kunde eine Transaktion nicht mit einer beliebigen Transaktionsnummer aus seiner TAN-Liste legitimieren kann, sondern von der Bank aufgefordert wird, eine bestimmte, durch eine Positionsnummer (Index) gekennzeichnete TAN aus seiner zu diesem Zweck durchnummerierten Liste einzugeben.

Insbesondere iTAN-Verfahren bieten somit zwar eine gewisse Sicherheit, nach dem heutigen Stand der Technik ist dadurch die Verhinderung von so genannten Man-in-the-Middle Attacken (MITM-Angriff) oder Echtzeitphishing jedoch nicht möglich. Bei einem solchen Angriff steht der Angreifer entweder physikalisch oder logisch zwischen den beiden Kommunikationspartnern, ohne dass diese es merken. Der Angreifer erhält so mit seinem System die Kontrolle über den Datenverkehr zwischen zwei oder mehreren Kommunikationspartnern und kann dadurch die ausgetauschten Informationen einsehen. Dabei täuscht der Angreifer beispielsweise einem Bankkunden das Vorhandensein der Webseite seiner Bank vor, wodurch von dem Bankkunden eingegebene TAN bzw. iTAN-Nummern abgegriffen und von einem Angreifer betrügerisch verwendet werden können.

Alternativ kann die Variante des mTAN (mobile TAN) zur Anwendung kommen, bei der einem Kunden nach Übersendung eines Transaktionsauftrags seitens der Bank per SMS eine nur für diesen Vorgang bestimmte Transaktionsnummer auf sein Mobiltelefon übermittelt wird. Der Transaktionsauftrag muss anschließend mit dieser Transaktionsnummer bestätigt werden.

Verfahren mit mTAN bieten im Vergleich zu iTAN/TAN-Verfahren zwar ein höheres Sicherheitsniveau und schützen vor Echtzeitphishing und Man-in-the-Middle-Attacken. Durch die fortschreitende technologische Entwicklung der mobilen Endgeräte und durch die komplexer werdenden Betriebssysteme dieser Geräte werden Angriffe jedoch wieder erleichtert. Ein weiteres Problem entsteht durch die Nutzung von mobilem Banking über WLAN-Schnittstellen dieser Geräte, da dabei die Kanaltrennung zwischen Internet und Mobilfunk aufgehoben ist.

Token-basierte Verfahren erfordern dagegen immer ein zusätzliches Endgerät für den Kunden, was sich in den Kosten widerspiegelt. Durch ein Token lässt sich das Sicherheitsniveau gegenüber TAN- und iTAN-Verfahren zwar steigern, gegen Echtzeitphishing schützt dieses Verfahren jedoch ebenfalls nicht.

Um die Nachteile der genannten Verfahren zu beheben, ist es ferner aus dem Stand der Technik bekannt, für die Verifikation einer Transaktion biometrische Merkmale einzusetzen. Neben der Verwendung von Fingerprints oder einem Augenscan können insbesondere Stimmerkennungsmethoden eingesetzt werden. Stimmerkennungsmethoden werden beispielsweise beim Telefonbanking eingesetzt. Anwender müssen dazu ein kurzes Programm durchführen, mit dem das Programm auf die individuellen Eigenheiten der jeweiligen Stimme trainiert wird. Teilt der Kunde seinen Namen, Geburtsdatum und sein Passwort über Telefon mit, verifiziert die Software den Kunden nicht nur durch die kundenspezifischen Daten, sondern analysiert gleichzeitig auch Tonhöhe, Sprachmelodie und Sprachbetonung.

Die europäische Patentschrift EP 1 172 771 B1 offenbart beispielsweise ein System zur Autorisierung von kommerziellen Transaktionen zwischen einem Kunden und einem Waren- und Dienstleistungsanbieter durch einen Autorisierungsdienstleister, welcher eine Stimmprobe analysiert. Beim Autorisierungsdienstleister sind Stimmmuster des Kunden hinterlegt und diese werden für eine Autorisierung herangezogen, wenn sich der Kunde über eine Telefonverbindung in Verbindung mit dem Waren- und Dienstleistungsanbieter setzt, der wiederum über einen Router eine Verbindung zu dem Autorisierungsdienstleister herstellt.

Ferner ist aus der Patentschrift US 5,806,040 ein Verifikationssystem über Spracherkennung bekannt, bei dem eine Telefon-, Bank- oder Kreditkarte verwendet wird. Das System stellt eine Verbindung zwischen dem Anwender der Karte und einem Telefonnetz her, wobei der Anmelder eine Kartennummer eingibt. Das System veranlasst den Anwender, ein Wort, einen Satz oder eine Zahlenfolge auszusprechen, zu dem/der Stimmmuster des jeweiligen Anwenders im System hinterlegt sind. Stimmen die gesprochenen Stimmproben mit den hinterlegten Mustern überein, wird der Anwender autorisiert.

Ausgehend vom Stand der Technik ist es Aufgabe der Erfindung, ein Verfahren zur Durchführung von verifizierten Transaktionen bereitzustellen, das für Onlinebanking über das Internet einsetzbar ist und das für den Auftraggeber einer Transaktion mit möglichst geringem Aufwand durchführbar ist.

Aufgabe der Erfindung ist es ferner, eine Vorrichtung zur Durchführung des Verfahrens bereitzustellen.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-12. Die Aufgabe wird ferner durch eine Transaktionseinheit nach Anspruch 13 gelöst. Vorteilhafte Ausführungsformen der Transaktionseinheit ergeben sich aus den Unteransprüchen 14-22.

Bei dem erfindungsgemäßen Verfahren zur verifizierten Durchführung von Transaktionen wird ein Transaktionsauftrag an einem Computermittel erzeugt und an eine Transaktionseinheit übermittelt. Diese Transaktionseinheit führt die beauftragte Transaktion durch, wobei der Transaktionsauftrag eine eindeutige Identifikation des Versenders des Transaktionsauftrags umfasst. Vor Durchführung der Transaktion wird eine Verifikation der Identität des Versenders des Transaktionsauftrags durchgeführt.

Das erfindungsgemäße Verfahren zeichnet sich durch verschiedene Schritte aus. Dazu gehört die Hinterlegung von biometrischen Erkennungsdaten wenigstens eines Versenders in einem Speicher in Verbindung mit der Transaktionseinheit, wobei die biometrischen Erkennungsdaten einer eindeutigen Identifikation des Versenders zugeordnet werden. Ferner wird ein Transaktionsauftrag durch die Transaktionseinheit verarbeitet, wobei die Transaktionseinheit die eindeutige Identifikation des Versenders aus dem Transaktionsauftrag ausliest und die beauftragte Transaktion wenigstens teilweise in akustische Signale umsetzt. Die Transaktionseinheit öffnet einen Kommunikationskanal zu einer Kommunikationseinrichtung im Bereich des Versenders und übermittelt die akustischen Signale über den Kommunikationskanal an die Kommunikationseinrichtung. Diese gibt die akustischen Signale aus. Ferner gibt der Versender des Transaktionsauftrags biometrische Daten in die Kommunikationseinrichtung ein und diese biometrischen Daten werden über den Kommunikationskanal an die Transaktionseinheit übermittelt. Diese ruft die biometrischen Erkennungsdaten des Versenders aus dem Speicher mittels der aus dem Transaktionsauftrag ausgelesenen eindeutigen Identifikation des Versenders auf und vergleicht die über den Kommunikationskanal empfangenen biometrischen Daten des Versenders mit den aus dem Speicher aufgerufenen biometrischen Erkennungsdaten des Versenders. Dabei erfolgt eine Verifikation der Identität des Versenders mittels der biometrischen Daten, wobei die Identität des Versenders bei Übereinstimmung der biometrischen Muster verifiziert wird. Bei positiver Verifikation der Identität des Versenders wird die Transaktion gemäß dem Transaktionsauftrag ausgeführt.

In einem Ausführungsbeispiel der Erfindung wird der Transaktionsauftrag an dem Computermittel über ein Onlinebanking-Programm erzeugt.

Als biometrische Daten können Sprachsignale verwendet werden, und die Verifikation der Identität des Versenders erfolgt in diesem Fall durch ein Spracherkennungsverfahren.

In einem Ausführungsbeispiel der Erfindung ist die Kommunikationseinrichtung im Bereich des Versenders ein Telefon, wobei es sich um ein Festnetz- oder Mobiltelefon handeln kann.

Die Verbindungsdaten zur Öffnung des Kommunikationskanals zu einer Kommunikationseinrichtung können beispielsweise im Speicher der Transaktionseinheit hinterlegt werden, wobei die Verbindungsdaten bei der Speicherung der eindeutigen Identifikation des Versenders des Transaktionsauftrags zugeordnet werden. Alternativ können diese Verbindungsdaten von einem Versender in einen Transaktionsauftrag eingebunden und von der Transaktionseinheit ausgelesen werden. Bei diesen Verbindungsdaten handelt es sich vorzugsweise um eine Telefonnummer.

In einem Ausführungsbeispiel der Erfindung erzeugt die Transaktionseinheit einen Code, der von der Transaktionseinheit in ein akustisches Signal umgesetzt wird, das über den Kommunikationskanal an die Kommunikationseinrichtung im Bereich des Versenders übermittelt wird. Der Versender setzt diesen Code in ein Sprachsignal um und gibt dieses Signal als biometrische Daten in die Kommunikationseinrichtung ein.

In einem bevorzugten Ausführungsbeispiel der Erfindung erzeugt die Transaktionseinheit für einen Versender einen öffentlichen und einen privaten Schlüssel, die mit einer Zuordnung zu der eindeutigen Identifikation des Versenders in dem Speicher der Transaktionseinheit hinterlegt werden. Der öffentliche Schlüssel wird an das Computermittel übermittelt, wobei das Computermittel mit dem öffentlichen Schlüssel den Transaktionsauftrag verschlüsselt. Die Transaktionseinheit ruft den öffentlichen und den privaten Schlüssel des Versenders aus dem Speicher ab und entschlüsselt den Transaktionsauftrag mit den Schlüsseln.

### Bei einer durchzuführenden Transaktion kann es sich beispielsweise um eine

Banküberweisung handeln, wobei der Transaktionsauftrag wenigstens die Höhe des Geldbetrags der Banküberweisung, die Kontonummer eines Geldversenders und die Kontodaten eines Geldempfängers umfasst. Wenigstens die Höhe des Geldbetrags der Banküberweisung und die Kontonummer des Geldversenders und die Kontodaten des Geldempfängers können in diesem Fall von der Transaktionseinheit in ein akustisches Signal umgesetzt, über den Kommunikationskanal an die Kommunikationseinrichtung übermittelt und von dieser ausgegeben werden.

In einem Ausführungsbeispiel der Erfindung werden die von der Transaktionseinheit über den Kommunikationskanal erhaltenen akustischen Signale von der Kommunikationseinrichtung des Versenders in optische Signale in Schriftform umgesetzt, damit sie auf einem Display der Kommunikationseinrichtung angezeigt werden können. Dadurch ist es beispielsweise auch taubstummen Personen möglich, das erfindungsgemäße Verfahren für Transaktionen zu nutzen.

Von der Erfindung umfasst ist ferner eine Transaktionseinheit zur verifizierten Durchführung von Transaktionen, wobei die Transaktionseinheit Mittel zum Empfangen eines Transaktionsauftrags von einem Computermittel und Mittel zur Durchführung einer beauftragten Transaktion umfasst. Die Transaktionseinheit weist ferner Mittel zur Verifikation der Identität des Versenders des Transaktionsauftrags auf.

Die Transaktionseinheit steht in Verbindung mit einem Speicher, in dem biometrische Erkennungsdaten wenigstens eines Versenders hinterlegt sind, wobei die biometrischen Erkennungsdaten einer eindeutigen Identifikation des Versenders zugeordnet sind. Die Transaktionseinheit weist ferner Mittel zum Aufruf der hinterlegten biometrischen Daten anhand der eindeutigen Identifikation des Versenders auf und umfasst ferner folgende Merkmale:
- Mittel zum Verarbeiten eines Transaktionsauftrags, wobei die Verarbeitung das Auslesen einer eindeutigen Identifikation des Versenders aus dem Transaktionsauftrag umfasst;
- Mittel zur wenigstens teilweisen Umsetzung des Transaktionsauftrags in akustische Signale;
- Mittel zum Öffnen eines Kommunikationskanals zu einer Kommunikationseinrichtung im Bereich des Versenders und Mittel zur Übermittelung der aus dem Transaktionsauftrag erzeugten akustischen Signale über den Kommunikationskanal an die Kommunikationseinrichtung;
- Mittel zum Empfang von biometrischen Daten von der Kommunikationseinrichtung über den Kommunikationskanal und zum Vergleich der biometrischen Daten mit den im Speicher hinterlegten biometrischen Erkennungsdaten des Versenders, wobei anhand der biometrischen Daten eine Verifikation der Identität des Versenders durchführbar ist; und
- Mittel zur Durchführung der Transaktion gemäß dem Transaktionsauftrag.

In einem Ausführungsbeispiel der Erfindung steht die Transaktionseinheit temporär oder permanent über das Internet in Verbindung mit dem Computermittel des Versenders.

In dem Speicher der Transaktionseinheit können biometrische Erkennungsdaten in Form von Sprachsignalen hinterlegt sein und die Transaktionseinheit umfasst in diesem Fall Mittel zur Durchführung eines Spracherkennungsverfahrens.

Die Verbindungsdaten zur Öffnung des Kommunikationskanals zu einer Kommunikationseinrichtung können im Speicher der Transaktionseinheit hinterlegt sein, wobei die Verbindungsdaten der eindeutigen Identifikation des Versenders des Transaktionsauftrags zugeordnet sind. Alternativ kann die Transaktionseinheit Mittel zum Auslesen von Verbindungsdaten zur Öffnung des Kommunikationskanals zu einer Kommunikationseinrichtung aus einem Transaktionsauftrag aufweisen.

Die Transaktionseinheit umfasst ferner Mittel zur Öffnung eines Kommunikationskanals zu einem Telefon. In diesem Fall handelt es sich bei den zu verwendenden Verbindungsdaten um eine Telefonnummer.

In einem Ausführungsbeispiel der Erfindung weist die Transaktionseinheit Mittel zur Erzeugung eines Codes und Mittel zur Umsetzung des Codes in ein akustisches Signal auf. Die Transaktionseinheit kann ferner Mittel zur Erzeugung eines öffentlichen und eines privaten Schlüssels für einen Versender und Mittel zur Hinterlegung der Schlüssel mit einer Zuordnung zu der eindeutigen Identifikation des Versenders in dem Speicher umfassen. Dabei weist sie ferner Mittel zur Übermittelung des öffentlichen Schlüssels an das Computermittel und Mittel zur Entschlüsselung eines mit dem öffentlichen Schlüssel verschlüsselten Transaktionsauftrags mit dem privaten und dem öffentlichen Schlüssel des Versenders auf.

In einem Ausführungsbeispiel der Erfindung weist die Transaktionseinheit ferner Mittel zur Umsetzung der Inhalte eines Transaktionsauftrags in akustische Signale und Mittel zur Übermittelung der akustischen Signale an die Kommunikationseinrichtung im Bereich des Versenders auf.

Durch das erfindungsgemäße Verfahren und die zugehörige Transaktionseinheit zur Durchführung des Verfahrens wird ein sehr hohes Sicherheitsniveau für Onlinetransaktionen erreicht. Es kann dadurch ausgeschlossen werden, dass Kunden durch Phishing-Attacken oder gefälschte Internetseiten Vermögensverluste erleiden. Über die Verifikation mittels eines Stimmabdrucks reduziert der Kunde das Risiko des Missbrauchs seiner Identität erheblich, wobei insbesondere bei variablen Stimmproben ein Diebstahl ausgeschlossen ist. Dies bedeutet, dass der Kunde beispielsweise für jede Transaktion einen zufällig erzeugten Code nachsprechen muss, dessen spezifischer Stimmabdruck somit zuvor nicht von möglichen Angreifern angegriffen worden sein kann.

In Kombination mit einem Rückruf sichert die Erfindung ferner für den Kunden, dass er die beauftragte Transaktion nochmals überprüfen und abbrechen kann, falls Daten nicht korrekt an die Transaktionseinheit übermittelt wurden.

Ein weiterer wesentlicher Vorteil der Erfindung liegt darin, dass ein Kunde sich für seine Transaktionen keine Passwörter oder Kennungen merken muss. Insbesondere bei Durchführung des erfindungsgemäßen Verfahrens über ein Mobiltelefon eines Kunden erhält dieser dadurch einen erheblichen Mobilitätsvorteil.

Die Erfindung kann nicht nur für das Onlinebanking (Überweisung, Kontostandsabruf, Aktienübertragung), sondern beispielsweise auch für Online-Zahlungsverfahren genutzt werden.

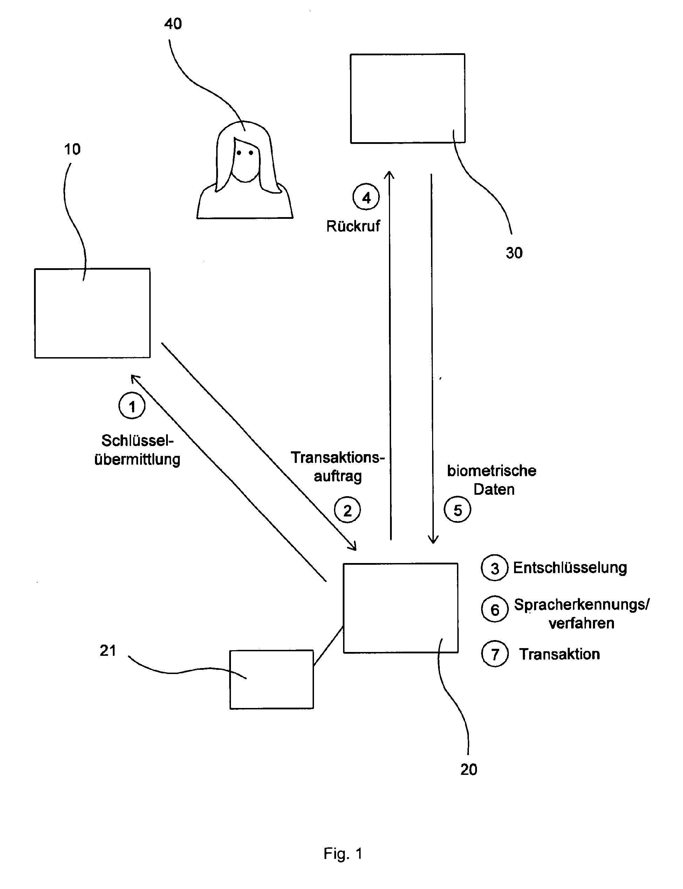

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung in Fig. 1.

In Fig. 1 sind die Abläufe bei einem Ausführungsbeispiel des erfindungsgemäßen Verfahrens schematisch dargestellt. Dabei sind die wesentlichen Schritte des Verfahrens durch eine aufsteigende Nummerierung in Kreisen gekennzeichnet. Es können jedoch auch zusätzliche oder alternative Schritte vorgesehen sein, oder die Reihenfolge der Schritte geändert werden, so dass die Erfindung nicht auf das dargestellte Ausführungsbeispiel beschränkt ist.

Das erfindungsgemäße Verfahren dient zur Verifikation von Transaktionsaufträgen, die einer Transaktionseinheit von einem Kunden zur anschließenden Durchführung übermittelt werden. Bei den Transaktionsaufträgen kann es sich um jegliche Aufträge handeln, mit denen beispielsweise ein Geld-, Waren- oder Dienstleistungstransfer beauftragt wird. Damit der Auftrag ausgeführt werden kann, muss die Identität des Versenders des Auftrags verifiziert werden. Der Transaktionsauftrag wird vorzugsweise an einem Computermittel des Versenders des Auftrags erzeugt und von diesem Computermittel an die Transaktionseinheit übermittelt. Die Übermittelung erfolgt beispielsweise über das Internet. Wird das erfindungsgemäße Verifizierungsverfahren beim Onlinebanking eingesetzt, umfasst das Computermittel üblicherweise ein herkömmliches Onlinebanking-Programm, das auf einem Computer eines Bankkunden installiert ist. Der Bankkunde kann damit Überweisungsaufträge an seine Bank senden und Kontostände abrufen.

An dem erfindungsgemäßen Verfahren sind eine Transaktionseinheit 20, ein Computermittel 10 und eine Kommunikationseinrichtung 30 beteiligt. Im Folgenden soll die Anwendung der Erfindung beim Onlinebanking erläutert werden, wobei es sich bei der Transaktionseinheit 20 um eine Einrichtung einer Bank handelt. In dieser Einrichtung sind die Kundendaten der Bankkunden verfügbar und die Transaktionseinheit ist berechtigt, Transaktionen selbst durchzuführen oder andere Komponenten des Systems damit zu beauftragen. Die Transaktionseinheit kann somit selbst alle für eine Transaktion erforderlichen Schritte durchführen oder sie dient beispielsweise als Station zwischen dem Kunden und einer oder mehrerer Banken. Die Transaktionseinheit kann ferner aus mehreren Komponenten bestehen, die einzelne Schritte bei der Verifikation und Durchführung einer Transaktion durchführen.

Die Transaktionseinheit 20 steht in Verbindung mit einem Speicher 21, in dem verschiedene Daten hinterlegt sind. Dabei kann es sich um die üblichen persönlichen Daten von Bankkunden handeln, die für die Kontoführung und Durchführung von Transaktionen erforderlich sind. Der Speicher 21 kann auch Teil der Transaktionseinheit 20 selbst sein. Neben diesen Kundendaten sind in dem Speicher biometrische Erkennungsdaten der Kunden hinterlegt, wobei die Speicherung vorzugsweise über eine eindeutige Identifikation der Kunden erfolgt. Bei der eindeutigen Identifikation handelt es sich beispielsweise um die Kontonummer eines Kunden. Zu jedem Kunden oder zu denjenigen Kunden, für die das erfindungsgemäße Verfahren nutzbar ist, sind somit biometrische Erkennungsdaten gespeichert, die zuvor von dem jeweiligen Kunden erzeugt wurden.

In einem bevorzugten Ausführungsbeispiel der Erfindung handelt es sich bei den biometrischen Daten um Sprachsignale bzw. Stimmmuster. Zur Hinterlegung dieser Form von biometrischen Erkennungsdaten durchläuft ein Kunde beispielsweise ein Erfassungsprogramm, indem er eine Telefonnummer wählt und vorgegebene Texte nachspricht. Die so erzeugten biometrischen Daten werden gespeichert und können anschließend für eine Verifikation der Identität des jeweiligen Kunden verwendet werden. Dabei muss der Kunde nicht die gleichen Texte erneut eingeben, die er für die Stimmprobe hinterlegt hat, sondern bekannte Spracherkennungsprogramme sind in der Lage, auch frei gesprochene Texte mit hinterlegten Stimmproben zu vergleichen, um eine Verifikation der Identität des Versenders durchzuführen.

Das Computermittel 10 und die Kommunikationseinrichtung 30 befinden sich im Bereich eines Versenders 40 eines Transaktionsauftrags. Auf dem Computermittel 10 ist ein Onlinebanking-Programm installiert, mit dem ein Kunde auf bekannte Weise einen Überweisungsauftrag erstellen oder seinen Kontostand abrufen kann. Nach Erstellung eines solchen Transaktionsauftrags wird das Computermittel 10 üblicherweise über das Internet mit der Transaktionseinheit 20 der Bank verbunden und der Transaktionsauftrag an die Bank übermittelt. Dieser Schritt ist in Fig. 1 mit der Ziffer 2 gekennzeichnet.

Bei der Kommunikationseinrichtung 30 im Bereich des Kunden handelt es sich vorzugsweise um ein Telefon. Das Telefon kann über einen Festnetzanschluss verfügen oder es handelt sich um ein Mobiltelefon. Die Transaktionseinheit 20 kann einen Kommunikationskanal zu dieser Kommunikationseinrichtung 30 öffnen, um in Kontakt mit dem Kunden zu treten. Dazu wählt sie die zugehörige Telefonnummer an. Die dazu erforderlichen Verbindungsdaten beispielsweise in Form einer Telefonnummer können zusammen mit den Kundendaten in dem Speicher 21 hinterlegt sein. In einem alternativen Ausführungsbeispiel der Erfindung übermittelt ein Versender eines Transaktionsauftrags zusammen mit dem Transaktionsauftrag Verbindungsdaten, unter denen er zu erreichen ist. Dies hat den Vorteil, dass der Versender wahlweise unterschiedliche Telefonnummern angeben kann, wenn er beispielsweise unterwegs und/oder im Urlaub ist.

Um die Sicherheit beim Datentransfer zwischen dem Computermittel 10 eines Kunden und der Transaktionseinheit 20 einer Bank zu erhöhen, hat es sich als vorteilhaft erwiesen, für den Datentransfer Verschlüsselungstechniken einzusetzen. In einem bevorzugten Ausführungsbeispiel der Erfindung erzeugt die Transaktionseinheit 20 daher für einen Kunden einen öffentlichen und einen privaten Schlüssel und hinterlegt dieses Schlüsselpaar in dem Speicher 21. Dabei wird das Schlüsselpaar einer eindeutigen Identifikation des jeweiligen Kunden zugeordnet, damit es darüber abrufbar ist.

Der öffentliche Schlüssel wird an den Kunden 40 übermittelt. Diese Übermittelung kann beispielsweise per E-Mail, Download oder per Post erfolgen. Dieser Schritt ist in Fig. 1 mit der Ziffer 1 gekennzeichnet. Dabei kann die Geltungsdauer des Schlüssels von der Transaktionseinheit 20 bzw. einer anderen Komponente frei gewählt werden.

Der Kunde verwendet diesen öffentlichen Schlüssel zur Verschlüsselung der Transaktionsaufträge, die an seinem Computermittel erzeugt und über das Internet an die Transaktionseinheit 20 übermittelt werden. Durch diese Verschlüsselung ist gewährleistet, dass bei einer Man-in-the-Middle-Attacke auf dem Übertragungsweg über das Internet von einem möglichen Angreifer nur Zahlenkolonnen ausgelesen werden können, da ein Angreifer nicht über den erforderlichen privaten Schlüssel verfügt, der nur in dem Speicher der Transaktionseinheit 20 hinterlegt ist..

Die Transaktionseinheit 20 empfängt somit über das Internet einen verschlüsselten Transaktionsauftrag von einem Versender 40 und entschlüsselt diesen mit dem zugehörigen öffentlichen und privaten Schlüssel des Versenders. Dieser Schritt ist in Fig. 1 mit der Ziffer 3 dargestellt. Die Transaktionseinheit 20 verarbeitet daraufhin den Transaktionsauftrag, was verschiedene Schritte umfassen kann. Die Transaktionseinheit liest zum einen die wesentlichen Informationen des Transaktionsauftrags aus. Bei einer Banküberweisung sind dies wenigstens die Kontonummer des Geldversenders, die Höhe eines Geldbetrages und die Kontodaten eines Geldempfängers. Vorzugsweise werden diese Informationen daraufhin von der Transaktionseinheit in akustische Signale in Sprachform umgesetzt. Diese Umwandlung kann mit einer herkömmlichen Text-to-Speech-Software erfolgen, die Informationen in Sprachsignale umwandelt.

Die Verarbeitung des Transaktionsauftrags durch die Transaktionseinheit kann ferner das Auslesen von Verbindungsdaten für den Kontakt mit der Kommunikationseinrichtung 30 des Kunden umfassen. Wünscht der Versender keine Kommunikation über im Speicher 21 für ihn hinterlegte Verbindungsdaten, gibt er im Transaktionsauftrag die aktuell von ihm bevorzugten Verbindungsdaten wie beispielsweise eine Telefonnummer an und diese werden von der Transaktionseinheit ausgelesen.

Nach Verarbeitung aller erforderlichen Daten aus dem Transaktionsauftrag öffnet die Transaktionseinheit 20 einen Kommunikationskanal zu der von dem Versender des Transaktionsauftrags gewünschten Kommunikationseinrichtung 30. Dieser Schritt ist in Fig. 1 mit der Ziffer 4 gekennzeichnet. Dieser Rückruf beispielsweise an ein Telefon oder Mobiltelefon des Versenders wird durch die Transaktionseinheit 20 veranlasst, so dass der Versender dadurch keinen zusätzlichen Aufwand hat. Die Transaktionseinheit führt den Rückruf durch, und sobald der Versender 40 den Anruf annimmt, übermittelt die Transaktionseinheit 20 vorzugsweise die aus dem Transaktionsauftrag erzeugten akustischen Stimmsignale zu den Transaktionsdaten, damit sich der Kunde diese nochmals anhören kann. Beispielsweise werden bei einer beauftragten Banküberweisung wenigstens die Höhe des zu überweisenden Geldbetrags und die Kontodaten des Geldempfängers an die Kommunikationseinrichtung 30 übermittelt und von dieser ausgegeben. Zusätzlich kann die Kontonummer des Geldversenders wiederholt werden. Die akustischen Sprachsignale werden vorzugsweise von einem Computer erzeugt. Alternativ kann der Überweisungsauftrag jedoch auch von einer menschlichen Stimme nachgesprochen werden, wobei die Kommunikation mit dem Kunden über einen Mitarbeiter erfolgt.

Die an ein Telefon des Versenders 40 übermittelte Sprachmitteilung enthält ferner die Aufforderung an den Kunden, in demselben Telefongespräch einen bestimmten Text nachzusprechen. Bei diesem Text kann es sich beispielsweise um einen Text oder eine Auswahl aus mehreren Texten handeln, die der Kunde bereits bei der Initialisierung und Hinterlegung von biometrischen Stimmproben hinterlegt hat. In einem alternativen Ausführungsbeispiel der Erfindung erzeugt die Transaktionseinheit zuvor einen variablen Code, welcher ebenfalls in ein akustisches Stimmsignal umgesetzt und an das Telefon des Kunden übermittelt wird. Der Versender eines Transaktionsauftrags wird aufgefordert, diesen Code nachzusprechen, so dass er über die Telefonverbindung an die Transaktionseinheit 20 übermittelt werden kann. Ferner kann der Kunde aufgefordert werden, zusätzlich seine PIN nachzusprechen oder in eine Tastatur einzugeben.

Die vom Kunden in das Telefon 30 gesprochenen biometrischen Daten werden über den Kommunikationskanal an die Transaktionseinheit 20 übermittelt. Dieser Schritt ist in Fig. 1 mit der Ziffer 5 gekennzeichnet. Die Transaktionseinheit vergleicht die von dem Versender eines Transaktionsauftrags in das Telefon 30 gesprochenen biometrischen Daten mit den hinterlegten biometrischen Erkennungsdaten des jeweiligen Versenders 40 und führt ein Spracherkennungsverfahren durch. Dieser Schritt ist in Fig. 1 mit der Ziffer 6 gekennzeichnet. Solche Spracherkennungsverfahren sind dem Fachmann bekannt und werden an dieser Stelle nicht ausführlich erläutert.

Ergibt der Verifikationsprozess, dass die beiden Stimmproben auf eine Identität der sprechenden Personen schließen lassen, wird die Identität des Versenders eines Transaktionsauftrags verifiziert und die Transaktion durchgeführt. Dieser Schritt ist in Fig. 1 mit der Ziffer 7 gekennzeichnet. Ergibt der Spracherkennungsprozess, dass die sprechenden Personen nicht übereinstimmen, wird die Identität des Versenders nicht verifiziert und der Vorgang abgebrochen. In beiden Fällen wird dem Versender vorzugsweise über eine Computerstimme oder eine menschliche Stimme mitgeteilt, ob der Verifizierungsvorgang erfolgreich war und die Überweisung durchgeführt werden wird.

Ist der Versender mit den nachgesprochenen Daten eines Transaktionsauftrags nicht einverstanden, gibt er keine Stimmprobe ab und bricht so ebenfalls den Überweisungsvorgang ab. Auch der Abbruch eines Telefongesprächs wird als Abbruch der Transaktion gewertet.

Damit das erfindungsgemäße Verfahren auch für Taubstumme zugänglich ist, kann es vorgesehen sein, dass die Kommunikationseinrichtung 30 eines Kunden so ausgebildet ist, dass sie akustische Signale in eine elektronische Anzeige von Sprache umwandeln kann. Ein Telefon eines taubstummen Kunden empfängt beispielsweise die nachgesprochenen Daten eines Transaktionsauftrags von einer Computerstimme und wandelt diese in eine Anzeige von Informationen auf dem Display des Telefons um. Alternativ werden die Daten eines Transaktionsauftrags von der Transaktionseinheit 20 nicht in akustische Sprachsignale umgewandelt, sondern sofort in anzeigefähige Daten umgewandelt, die auf einem Display der Kommunikationseinrichtung 30 des Kunden anzeigbar sind. In beiden Fällen gibt der Versender des Transaktionsauftrags keine biometrische Stimmprobe ab, sondern identifiziert sich beispielsweise über einen Fingerabdruck oder einen Augenscan, wobei der Versender über ein Gerät zur Angabe eines elektronischen Fingerabdrucks oder Augenscans verfügen muss.

### Bezugszeichenliste:

- 10: Computermittel, Onlinebanking-Programm
- 20: Transaktionseinheit, Bank
- 21: Speicher
- 30: Kommunikationseinrichtung, Telefon, Mobiltelefon
- 40: Versender, Kunde, Auftraggeber

## Patentansprüche

1. Verfahren zur verifizierten Durchführung von Transaktionen, bei dem ein Transaktionsauftrag an einem Computermittel (10) erzeugt und an eine Transaktionseinheit (20) übermittelt wird, welche die beauftragte Transaktion durchführt, wobei der Transaktionsauftrag eine eindeutige Identifikation des Versenders (40) des Transaktionsauftrags umfasst und vor Durchführung der Transaktion eine Verifikation der Identität des Versenders (40) des
Transaktionsauftrags durchgeführt wird,
**gekennzeichnet durch** wenigstens folgende Schritte:
- Hinterlegung von biometrischen Erkennungsdaten wenigstens eines Versenders (40) in einem Speicher (21) in Verbindung mit der Transaktionseinheit (20), wobei die biometrischen Erkennungsdaten einer eindeutigen Identifikation des Versenders (40) zugeordnet werden;
- Verarbeiten des Transaktionsauftrags **durch** die Transaktionseinheit (20), wobei die Transaktionseinheit (20) die eindeutige Identifikation des Versenders (40) aus dem Transaktionsauftrag ausliest und die beauftragte Transaktion wenigstens teilweise in akustische Signale umsetzt;
- Öffnen eines Kommunikationskanals zu einer Kommunikationseinrichtung (30) im Bereich des Versenders (40) **durch** die Transaktionseinheit (20);
- Übermittelung der akustischen Signale über den Kommunikationskanal an die Kommunikationseinrichtung (30) und Ausgabe der akustischen Signale über die Kommunikationseinrichtung (20);
- Eingabe von biometrischen Daten in die Kommunikationseinrichtung (30) **durch** den Versender (40) des Transaktionsauftrags und Übermittelung der biometrischen Daten über den Kommunikationskanal an die Transaktionseinheit (20);
- Aufruf der biometrischen Erkennungsdaten des Versenders (40) aus dem Speicher (21) mittels der aus dem Transaktionsauftrag ausgelesenen eindeutigen Identifikation des Versenders (40);
- Vergleich der über den Kommunikationskanal empfangenen biometrischen Daten des Versenders (40) mit den aus dem Speicher (21) aufgerufenen biometrischen Erkennungsdaten des Versenders (40) und Verifikation der Identität des Versenders (40) mittels der biometrischen Daten, wobei die Identität des Versenders (40) bei Übereinstimmung der biometrischen Muster verifiziert wird;
- Durchführung der Transaktion gemäß dem Transaktionsauftrag bei positiver Verifikation der Identität des Versenders (40).

2. Verfahren nach Anspruch 1,
**dadurch gekennzeichnet,**
**dass** der Transaktionsauftrag an dem Computermittel (10) über ein Onlinebanking-Programm erzeugt wird.

3. Verfahren nach einem oder beiden der Ansprüche 1 und 2,
**dadurch gekennzeichnet,**
**dass** als biometrische Daten Sprachsignale verwendet werden und die Verifikation der Identität des Versenders (40) durch ein Spracherkennungsverfahren erfolgt.

4. Verfahren nach einem oder mehreren der Ansprüche 1 bis 3,
**dadurch gekennzeichnet,**
**dass** die Kommunikationseinrichtung (30) im Bereich des Versenders (40) ein Telefon ist.

5. Verfahren nach einem oder mehreren der Ansprüche 1 bis 4,
**dadurch gekennzeichnet,**
**dass** die Verbindungsdaten zur Öffnung des Kommunikationskanals zu einer Kommunikationseinrichtung (30) im Speicher (21) hinterlegt werden, wobei die Verbindungsdaten bei der Speicherung der eindeutigen Identifikation des Versenders (40) des Transaktionsauftrags zugeordnet werden.

6. Verfahren nach einem oder mehreren der Ansprüche 1 bis 4,
**dadurch gekennzeichnet,**
**dass** die Verbindungsdaten zur Öffnung des Kommunikationskanals zu einer Kommunikationseinrichtung (30) von dem Computermittel (10) in den Transaktionsauftrag eingebunden werden und von der Transaktionseinheit (20) ausgelesen werden.

7. Verfahren nach einem oder mehreren der Ansprüche 4 bis 6,
**dadurch gekennzeichnet,**
**dass** es sich bei den Verbindungsdaten um eine Telefonnummer handelt.

8. Verfahren nach einem oder mehreren der Ansprüche 3 bis 7,
**dadurch gekennzeichnet,**
**dass** die Transaktionseinheit (20) einen Code erzeugt, der von der Transaktionseinheit (20) in ein akustisches Signal umgesetzt wird, das über den Kommunikationskanal an die Kommunikationseinrichtung (30) übermittelt wird, und dass der Versender (40) den Code in ein Sprachsignal umsetzt und als biometrische Daten in die Kommunikationseinrichtung (30) eingibt.

9. Verfahren nach einem oder mehreren der Ansprüche 1 bis 8,
**dadurch gekennzeichnet,**
**dass** die Transaktionseinheit (20) für einen Versender (4) einen öffentlichen und einen privaten Schlüssel erzeugt, die mit einer Zuordnung zu der eindeutigen Identifikation des Versenders (40) in dem Speicher (21) hinterlegt werden, und dass der öffentliche Schlüssel an das Computermittel (10) übermittelt wird, wobei das Computermittel (10) mit dem öffentlichen Schlüssel den Transaktionsauftrag verschlüsselt, und dass die Transaktionseinheit (20) den öffentlichen und den privaten Schlüssel des Versenders (40) aus dem Speicher (21) abruft und den Transaktionsauftrag mit den Schlüsseln entschlüsselt.

10. Verfahren nach einem oder mehreren der Ansprüche 1 bis 9,
**dadurch gekennzeichnet,**
**dass** die Transaktion eine Banküberweisung ist und der Transaktionsauftrag wenigstens die Höhe des Geldbetrags der Banküberweisung, die Kontonummern eines Geldversenders und die Kontodaten eines Geldempfängers umfasst.

11. Verfahren nach Anspruch 10,
**dadurch gekennzeichnet,**
**dass** wenigstens die Höhe des Geldbetrags der Banküberweisung und die Kontonummer des Geldversenders und die Kontodaten des Geldempfängers von der Transaktionseinheit (20) in ein akustisches Signal umgesetzt und über den Kommunikationskanal an die Kommunikationseinrichtung (30) übermittelt und von dieser ausgegeben werden.

12. Verfahren nach einem oder mehreren der Ansprüche 1 bis 11,
**dadurch gekennzeichnet,**
**dass** die von der Transaktionseinheit (20) über den Kommunikationskanal erhaltenen akustischen Signale von der Kommunikationseinrichtung (30) in optische Signale in Schriftform umgesetzt werden.

13. Transaktionseinheit (20) zur verifizierten Durchführung von Transaktionen, wobei die Transaktionseinheit (20) Mittel zum Empfangen eines Transaktionsauftrags von einem Computermittel (10) und Mittel zur Durchführung einer beauftragten Transaktion umfasst, und die Transaktionseinheit (20) ferner Mittel zur Verifikation der Identität des Versenders (40) des Transaktionsauftrags aufweist,
**dadurch gekennzeichnet,**
**dass** die Transaktionseinheit (20) in Verbindung mit einem Speicher (21) steht, in dem biometrische Erkennungsdaten wenigstens eines Versenders (40) hinterlegt sind, wobei die biometrischen Erkennungsdaten einer eindeutigen Identifikation des Versenders (40) zugeordnet sind; und dass die Transaktionseinheit (20) Mittel zum Aufruf der hinterlegten biometrischen Daten anhand der eindeutigen Identifikation des Versenders (40) aufweist; und dass die Transaktionseinheit (20) ferner folgende Merkmale umfasst:
- Mittel zum Verarbeiten des Transaktionsauftrags, wobei die Verarbeitung das Auslesen einer eindeutigen Identifikation des Versenders (40) aus dem Transaktionsauftrag umfasst,
- Mittel zur wenigstens teilweisen Umsetzung des Transaktionsauftrags in akustische Signale;
- Mittel zum Öffnen eines Kommunikationskanals zu einer Kommunikationseinrichtung (30) im Bereich des Versenders (40) und Mittel zur Übermittelung der aus dem Transaktionsauftrag erzeugten akustischen Signale über den Kommunikationskanal an die Kommunikationseinrichtung (30);
- Mittel zum Empfang von biometrischen Daten von der Kommunikationseinrichtung (30) über den Kommunikationskanal und zum Vergleich der biometrischen Daten mit den im Speicher (21) hinterlegten biometrischen Erkennungsdaten des Versenders (40), wobei anhand der biometrischen Daten eine Verifikation der Identität des Versenders (40) durchführbar ist; und
- Mittel zur Durchführung der Transaktion gemäß dem Transaktionsauftrag.

14. Transaktionseinheit nach Anspruch 13,
**dadurch gekennzeichnet,**
**dass** die Transaktionseinheit (20) temporär oder permanent über das Internet in Verbindung mit dem Computermittel (10) steht.

15. Transaktionseinheit nach einem oder beiden der Ansprüche 13 und 14,
**dadurch gekennzeichnet,**
**dass** in dem Speicher (21) biometrische Daten in Form von Sprachsignalen hinterlegt sind und die Transaktionseinheit (20) Mittel zur Durchführung eines Spracherkennungsverfahrens umfasst.

16. Transaktionseinheit nach einem oder mehreren der Ansprüche 13 bis 15,
**dadurch gekennzeichnet,**
**dass** die Transaktionseinheit (20) Mittel zur Öffnung eines Kommunikationskanals zu einem Telefon umfasst.

17. Transaktionseinheit nach einem oder mehreren der Ansprüche 13 bis 16,
**dadurch gekennzeichnet,**
**dass** die Verbindungsdaten zur Öffnung des Kommunikationskanals zu einer Kommunikationseinrichtung (30) im Speicher (21) hinterlegt sind, wobei die Verbindungsdaten der eindeutigen Identifikation des Versenders (40) des Transaktionsauftrags zugeordnet sind.

18. Transaktionseinheit nach einem oder mehreren der Ansprüche 13 bis 17,
**dadurch gekennzeichnet,**
**dass** die Transaktionseinheit (20) Mittel zum Auslesen von Verbindungsdaten zur Öffnung des Kommunikationskanals zu einer Kommunikationseinrichtung (30) aus einem Transaktionsauftrag aufweist.

19. Transaktionseinheit nach einem oder mehreren der Ansprüche 16 bis 18,
**dadurch gekennzeichnet,**
**dass** die Verbindungsdaten eine Telefonnummer sind.

20. Transaktionseinheit nach einem oder mehreren der Ansprüche 13 bis 19,
**dadurch gekennzeichnet,**
**dass** die Transaktionseinheit (20) Mittel zur Erzeugung eines Codes und Mittel zur Umsetzung des Codes in ein akustisches Signal aufweist.

21. Transaktionseinheit nach einem oder mehreren der Ansprüche 13 bis 20,
**dadurch gekennzeichnet,**
**dass** die Transaktionseinheit (20) Mittel zur Erzeugung eines öffentlichen und eines privaten Schlüssels für einen Versender (40) und Mittel zur Hinterlegung der Schlüssel mit einer Zuordnung zu der eindeutigen Identifikation des Versenders (40) in dem Speicher (21) umfasst, wobei die Transaktionseinheit (20) ferner Mittel zur Übermittelung des öffentlichen Schlüssels an das Computermittel (10) und Mittel zur Entschlüsselung eines mit dem öffentlichen Schlüssel verschlüsselten Transaktionsauftrags mit dem privaten und dem öffentlichen Schlüssel des Versenders (40) umfasst.

22. Transaktionseinheit nach einem oder mehreren der Ansprüche 13 bis 21,
**dadurch gekennzeichnet,**
**dass** die Transaktionseinheit (20) Mittel zur Umsetzung der Inhalte eines Transaktionsauftrags in akustische Signale und Mittel zur Übermittelung der akustischen Signale an die Kommunikationseinrichtung (30) im Bereich des Versenders (40) umfasst.
